# FASCICULE DE BREVET EUROPEEN

(11) **EP 1 915 557 B1**
(45) Date de publication et mention de la délivrance du brevet: **30.06.2010**
(21) Numéro de dépôt: 06794265.6
(22) Date de dépôt: 02.08.2006
(51) Int. Cl.: F16K 31/06, F02M 63/00

(54) **ELECTROVANNE DE RÉGULATION DE PRESSION DE BLOCS ÉLECTROMAGNÉTIQUE ET HYDRAULIQUE DISTINCTS**
ELEKTROMAGNETISCHES DRUCKSTEUERVENTIL FÜR VERSCHIEDENE ELEKTROMAGNETISCHE UND HYDRAULISCHE EINHEITEN
PRESSURE-CONTROLLING ELECTROMAGNETIC VALVE FOR DISTINCT ELECTROMAGNETIC AND HYDRAULIC UNITS

(30) Priorité: 03.08.2005 FR 0508289
(43) Date de publication de la demande: 30.04.2008
(73) Titulaire: BorgWarner, Inc., Auburn Hills, MI 48326-2872 (US)
(72) Inventeur: ESCANDELL, Gillian, F-06000 Nice (FR); GARCIA, Gérard, F-06700 Saint Laurent du Var (FR); DESAINT, Gérard, F-06500 Menton (FR)
(74) Mandataire: Littolff, Denis
(86) Numéro de dépôt international: PCT/FR2006/001873
(87) Numéro de publication internationale: WO 2007/015005

(56) Documents cités:
- DE-A1- 2 262 925
- DE-A1- 10 200 915
- US-A1- 2002 113 219
- US-A1- 2005 092 951

## Description

La présente invention concerne une électrovanne de régulation de pression comprenant classiquement un sous-ensemble électrique muni d'une bobine et sa culasse, associé à un sous-ensemble hydraulique. Celui-ci comporte à titre principal un siège traversé par un conduit reliant deux circuits de fluide respectivement à haute et à basse pression, des moyens d'obturation dudit conduit, un poussoir coulissant dans une pièce polaire et qui actionne ces moyens d'obturation, et un noyau mobile solidaire du poussoir dont le déplacement est contrôlé par la bobine.

Ces pièces sont par exemple, comme dans US 2002/0113219 A1, utilisées dans des systèmes d'injection directe de carburant pour moteurs thermiques du type à rail commun, dans lesquelles elles ont une fonction de contrôle de la pression d'injection : dès lors que celle-ci excède un seuil prédéterminé, du fluide est déchargé du rail et renvoyé vers le réservoir de carburant du véhicule. Elles sont en fait directement montées sur ledit rail commun, à l'intérieur duquel le carburant est porté à très haute pression à l'aide d'une pompe à haute pression, en vue d'alimenter les injecteurs du moteur. Pour des raisons pratiques, notamment de connexion, ces électrovannes, ou du moins la partie dépassant à l'extérieur du rail commun, doit pouvoir tourner. Jusqu'ici, leur mode de fixation à rotation dans des orifices du rail commun était réalisé par un système écrou/contre-écrou fixé au filetage intérieur dudit orifice. Une telle configuration présente l'inconvénient d'organiser la rotation à un endroit potentiellement en contact avec le fluide, notamment car elle autorise un glissement au niveau du contre-écrou, ce qui implique que le jonc supposé réaliser l'étanchéité dans la liaison mécanique permettant la rotation de l'électrovanne est ouvert. Au montage, et surtout lors des manipulations ultérieures de l'électrovanne, des particules peuvent se mélanger au carburant, qui sont ensuite susceptibles de se loger par exemple sur la bille qui équipe le clapet de l'électrovanne, entravant ainsi le bon fonctionnement du régulateur.

L'émission de particules peut d'ailleurs être un obstacle au bon fonctionnement d'autres éléments du rail commun, comme par exemple les injecteurs, le piston de la pompe, etc. Les jeux mécaniques prévus pour le fonctionnement de ces pièces se montent à quelques microns, et leur utilisation peut facilement être perturbée par l'existence des micro-particules véhiculées par le carburant.

Par ailleurs, dans les configurations de l'art antérieur, les parties électriques de l'électrovanne sont au contact du circuit hydraulique. En particulier, les bobines surmoulées en plastique génèrent, au contact du carburant, des particules qui peuvent également et de la même manière perturber le fonctionnement de l'ensemble du système d'injection. Or, comme on l'a vu, la propreté du carburant est un critère fondamental, du fait des tolérances extrêmement réduites des différentes pièces mécaniques : c'est sur cette question que l'objet de l'invention apporte une contribution.

Ainsi, l'électrovanne de régulation qui en fait l'objet propose une configuration dans laquelle l'émission de particules est supprimée, ou tout au moins réduite dans des proportions considérables par rapport aux dispositifs de l'art antérieur.

Cela résulte notamment du fait que les sous-ensembles électriques et hydrauliques forment deux blocs unitaires distincts. Le caractère distinct de ces deux blocs signifie notamment que la bobine électrique surmoulée par un matériau plastique n'est plus en contact du fluide parcourant le sous-ensemble hydraulique. L'indépendance des parties hydraulique et électrique est également avantageuse en termes d'étanchéité, laquelle s'avère en effet plus simple à mettre en oeuvre que dans les dispositifs de l'art antérieur.

Par ailleurs, l'ensemble écrou/contre-écrou tel qu'il existe dans l'art antérieur est remplacé par un montage dans lequel, selon l'invention, le sous-ensemble électrique est fixé à rotation directement sur l'ensemble hydraulique. En d'autres termes, dans l'invention, le lieu de la rotation relative est déplacé à un endroit où les liaisons mécaniques ne sont guère susceptibles d'être en contact avec le carburant. Enfin, la nouvelle configuration de la liaison au rail, qui n'est mise en oeuvre qu'au moment du montage, ne génère pas de particules au cours du fonctionnement.

Dans la configuration de l'invention, lesdits blocs sont donc montés à rotation l'un par rapport à l'autre, par assemblage du bloc hydraulique dans un conduit traversant du bloc électromagnétique, une rondelle de blocage disposée à l'une des extrémités du conduit empêchant son déplacement axial dans un sens, et un épaulement situé à l'autre extrémité dudit conduit empêchant son déplacement axial dans l'autre sens par contact avec une butée du bloc hydraulique. Une rondelle souple est de plus interposée entre l'épaulement et la butée.

Chacun des blocs est donc envisagé comme un composant à part entière, remplissant une fonction purement électrique dans un cas, et exclusivement hydraulique dans l'autre cas et permettant la mise en oeuvre d'une rotation relative qui répond aux préoccupations évoquées auparavant.

La rondelle de blocage, fixée au bloc hydraulique et reposant sur le bloc électromagnétique, est positionnée de manière à ce que la rondelle souple soit comprimée entre lesdits blocs.

A titre principal, le maintien axial en pression est donc assuré par la rondelle de blocage. Le degré de liberté en rotation qui existe entre le sous-ensemble électrique et le sous-ensemble hydraulique n'implique pas que l'un soit totalement libre en rotation par rapport à l'autre. La compression de la rondelle souple permet au contraire le contrôle d'un couple de rotation assurant une stabilité en position de l'électrovanne dépassant du rail commun. Cette stabilité, outre son intérêt pour les opérations de connexion des électrovannes en situation, réduit considérablement les mouvements parasites susceptibles de créer éventuellement des particules indésirables.

La rondelle de blocage est fixée au bloc hydraulique par arc-boutement, et comporte une surface plane d'allure radiale reposant sur un épaulement du conduit du bloc électromagnétique.

Selon une possibilité, elle comporte une couronne périphérique dotée d'un rebord extérieur plan d'orientation axiale en contact avec la paroi intérieure du conduit, des languettes inclinées se développant de la surface plane radiale vers l'intérieur, dont les extrémités libres s'arc-boutent contre la paroi extérieure du bloc hydraulique.

De telles rondelles, connues en soi, permettent le réglage du couple de rotation en modulant l'effort axial appliqué à la rondelle souple lors de sa mise en place. Le frottement qui résulte dudit effort axial appliqué au niveau de la rondelle séparant les sous-ensembles électriques et hydrauliques permet d'éviter toute rotation aisée de la bobine et est prévu de manière à autoriser la rotation forcée sans destruction des composants et sans génération de particules dans la partie hydraulique. De préférence encore, la rondelle de blocage est en acier.

Pour assurer la fonction particulière pour laquelle elle est prévue, la rondelle souple est par exemple en EPDM (éthylène propylène diène).

Dans la configuration de l'invention, le poussoir et le noyau axial sont capotés par un couvercle cylindrique fixé de manière étanche à la pièce polaire.

La fixation s'effectue par exemple par soudage.

Le capotage assure le caractère distinct du composant hydraulique, puisqu'il permet au fluide de rester confiné dans l'enceinte réalisée par ce capotage. Celle-ci n'est plus délimitée, comme c'était le cas jusqu'ici, par les parties électriques de l'électrovanne.

Plus précisément, le poussoir et le noyau mobile peuvent être capotés par un capuchon fermant leur extrémité libre à l'opposé du siège, associé à un manchon cylindrique hermétiquement fixée d'un côté au dit capuchon et de l'autre sur la butée du bloc hydraulique, et sur lequel s'applique la rondelle de blocage.

C'est donc uniquement la partie située dans le conduit traversant du bloc électromagnétique qui fait l'objet du capotage. Celui-ci s'arrête au niveau de la butée de la pièce polaire, c'est-à-dire à l'endroit où la rondelle souple est interposée entre les deux blocs respectivement électrique et hydraulique.

Le capotage permet également l'interposition d'un ressort entre la paroi d'extrémité d'orientation radiale du couvercle ou du capuchon et le noyau mobile. Ce ressort repousse les moyens d'obturation de l'électrovanne au contact de leur siège, permettant de créer mécaniquement une valeur seuil prédéterminée qui génère une pression minimale dans le rail. En d'autres termes, sans alimentation électrique, l'électrovanne génère une pression naturelle assurant une mise en pression minimale du rail commun.

Le ressort étant en appui, à l'une de ses extrémités, contre le capuchon sur lequel s'applique la rondelle de blocage, cette dernière permet, selon son positionnement et en plus du réglage de l'effort appliqué à la rondelle souple, le réglage de la force de rappel exercée sur les moyens d'obturation par compression du ressort.

Selon une configuration possible, les moyens d'obturation consistent en une bille sollicitée par le poussoir vers le débouché du conduit traversant le siège.

Cette bille, positionnée de manière à obturer le conduit reliant les deux circuits respectivement à haute et basse pression, notamment par coopération avec le siège, ne peut pas s'échapper du fait de la forme donnée au dit siège et de l'existence de l'effort de rappel communiqué au poussoir par le ressort.

L'extrémité du poussoir prévu pour coopérer avec la bille peut comporter une pièce en matériau plus dur que celui du reste du poussoir.

La sortie aval du conduit du siège, côté bille, mène à au moins un canal d'échappement radial pratiqué dans la paroi de la pièce polaire.

Ce canal d'échappement est relié au réservoir du véhicule, et permet l'échappement du fluide vers ce réservoir lorsque le clapet de l'électrovanne s'ouvre.

La fixation de l'électrovanne de régulation selon l'invention dans une paroi du rail commun peut se faire de la manière suivante : la pièce polaire comporte au voisinage du siège, au-delà du ou des canaux d'échappement, un filetage précédant une encoche périphérique logeant un joint torique. Par rapport à l'art antérieur décrit auparavant, il n'est plus question d'écrou ou de contre-écrou. L'avantage, en termes de pollution par des particules, réside dans le fait qu'après le montage la liaison mécanique n'est plus concernée par la rotation relative du bloc électromagnétique et du bloc hydraulique.

L'invention englobe également une application de l'électrovanne de régulation de pression ci-dessus, qui correspond à l'exemple préférentiel utilisé à titre de fil conducteur de ladite description : le circuit de haute pression est celui d'un rail commun de moteur, le circuit de basse pression est relié au réservoir du véhicule doté dudit moteur, et le fluide est du carburant pour ce dernier.

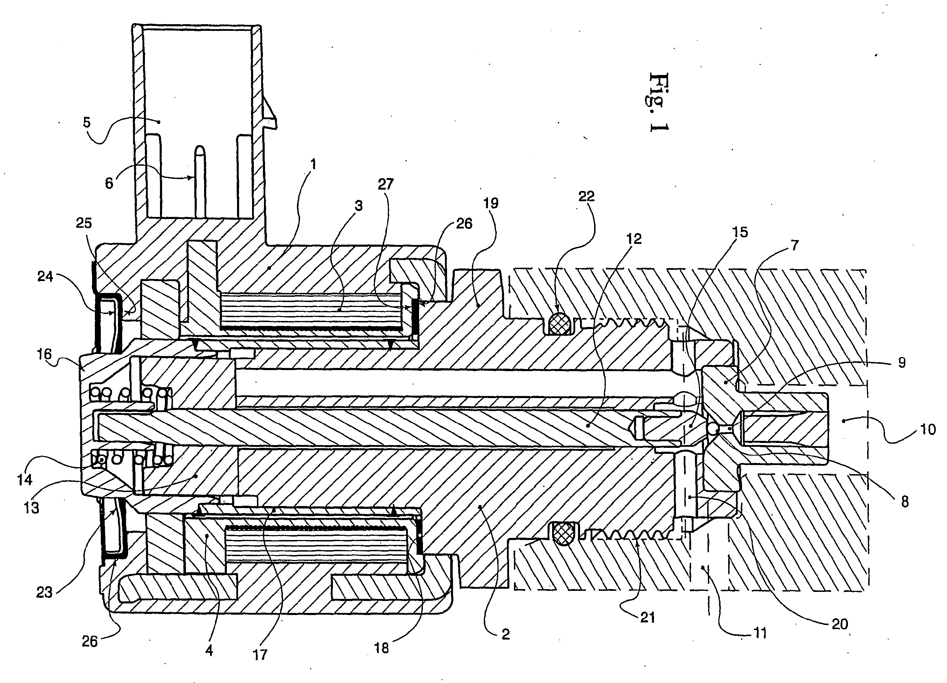

L'invention va à présent être décrite plus en détail, en référence à l'unique figure annexée, la figure 1, qui représente une vue en coupe longitudinale d'une électrovanne selon l'invention.

En référence à cette figure, le sous-ensemble ou bloc électromagnétique est référencé (1), et le sous-ensemble ou bloc hydraulique est référencé (2). Le bloc électromagnétique (1) comporte à titre principal une bobine (3) enroulée autour d'une culasse magnétique (4), l'ensemble étant surmoulé. Un connecteur (5) permet le raccordement de l'électrovanne à l'aide des picots conducteurs (6).

Le bloc hydraulique (2) comprend un siège (7) pour une billé (8) permettant d'obturer un conduit (9) reliant la partie haute pression (10) du circuit hydraulique à une partie basse pression (11). La bille (8) est maintenue au contact du siège par un poussoir (12) solidarisé au noyau mobile (13) coulissant à l'intérieur du bloc électromagnétique (1). Un ressort (14) permet d'exercer une force de rappel sur la bille (8), établissant un seuil de pression minimale du clapet de l'électrovalve. A l'extrémité du poussoir (12) exerçant une action sur la bille (8), est prévu de solidariser une pièce (15) en matériau plus dur. Le ressort (14) s'appuie, outre sur le noyau mobile (13), sur un capuchon (16) qui ferme le volume du bloc hydraulique (2) en association avec un manchon cylindrique (17) auquel il est soudé, et dont l'autre extrémité est fixée (par exemple également par soudage) au niveau d'un épaulement (18) d'une pièce polaire (19). C'est dans cette pièce polaire (19) que sont pratiqués les canaux d'évacuation (20) permettant de rejeter le fluide, dans le circuit à basse pression (11), à destination du réservoir de carburant.

Le bloc hydraulique (2) est muni d'un filetage externe (21) permettant la fixation à un filetage interne prévu dans l'orifice de raccordement au rail commun. Un joint torique (22) assure l'étanchéité avec l'extérieur.

Une rondelle de blocage (23), par exemple en inox, assure la fixation axiale du bloc hydraulique (2) dans le bloc électromagnétique (1). Cette rondelle (23) est reliée à force sur le capuchon (16) par une liaison à arc-boutement de sa partie médiane, par exemple composée d'un certain nombre de languettes. La couronne extérieure comporte une première surface (24) reposant sur un épaulement (25) du bloc électromagnétique (1), et un rebord périphérique d'orientation axiale (26) au contact dudit bloc électromagnétique (1).

Une rondelle souple (23), par exemple en EPDM, est interposée entre l'épaulement (18) de la pièce polaire (19) et un épaulement (27) du bloc électromagnétique (1).

La rondelle de blocage (23) s'oppose à tout déplacement en translation du bloc hydraulique (2) par rapport au bloc électromagnétique (1), mais ne s'oppose pas à la rotation entre les deux. La rondelle souple (26) ne s'y oppose pas non plus, mais elle crée, du fait du frottement, un couple qui s'oppose à ladite rotation. La valeur de ce couple dépend de la position relative entre la rondelle de blocage (23) et le capuchon (16), c'est-à-dire en fait de la pression axiale qui lui est imprimée.

L'existence de cette rondelle souple (26) permet d'éviter la rotation accidentelle de la bobine. Elle est, de plus, dimensionnée de sorte à autoriser la rotation forcée, mais sans frottements destructeurs des composants, et par conséquent sans génération de particules. Le capotage de la portion gauche du bloc hydraulique (2), à l'aide du manchon (17) et du capuchon (16), permet une indépendance totale entre le circuit hydraulique et le bloc électromagnétique (1), évitant tout passage d'éventuelles particules du surmoulage plastique de la bobine (3) vers le fluide.

L'ensemble de ces caractéristiques permet d'aboutir à un produit particulièrement peu polluant, en termes de génération de microparticules. La conception est donc très avantageuse dans des systèmes à injection dans lesquels toutes les pièces métalliques obéissent à des tolérances de dimensionnement très fines, susceptibles d'être perturbées par lesdites particules.

## Revendications

1. Electrovanne de régulation de pression comprenant un sous-ensemble électrique (1) muni d'une bobine (3) et sa culasse (4), un sous-ensemble hydraulique (2) comportant un siège (7) traversé par un conduit (9) reliant deux circuits de fluide (10, 11) respectivement à haute et à basse pression, des moyens d'obturation (8) dudit conduit (9), un poussoir (12) coulissant dans une pièce polaire (19) et actionnant lesdits moyens d'obturation (8), un noyau mobile (13) solidaire du poussoir (12) et dont le déplacement est contrôlé par la bobine (3), les sous-ensembles électrique (1) et hydraulique (2) forment deux blocs unitaires distincts, **caractérisée en ce que** lesdits blocs sont montés à rotation l'un par rapport à l'autre par assemblage du bloc hydraulique (2) dans un conduit traversant du bloc électromagnétique (1), une rondelle de blocage (23) disposée à l'une des extrémités du conduit empêchant tout déplacement axial du bloc hydraulique (2) dans un sens et un épaulement (27) situé à l'autre extrémité dudit conduit empêchant tout déplacement axial dans l'autre sens par contact avec une butée (18) du bloc hydraulique (2), une rondelle souple (26) étant interposée entre l'épaulement (27) et la butée (18).

2. Electrovanne de régulation de pression selon la revendication précédente, **caractérisée en ce que** la rondelle de blocage (23), fixée au bloc hydraulique (2) et reposant sur le bloc électromagnétique (1) est positionnée de manière à ce que la rondelle souple (26) soit comprimée entre lesdits blocs.

3. Electrovanne de régulation de pression selon la revendication 2, **caractérisée en ce que** la rondelle de blocage (23) est fixée au bloc hydraulique (2) par arc-boutement, et comporte une surface plane (24) d'allure radiale reposant sur un épaulement (25) du conduit du bloc électromagnétique (1).

4. Electrovanne de régulation de pression selon la revendication précédente, **caractérisée en ce que** la rondelle de blocage (23) comporte une couronne périphérique comportant un rebord extérieur d'orientation axiale en contact avec la paroi intérieure du conduit, et des languettes inclinées se développant de la surface plane (24) radiale vers l'intérieur, dont les extrémités libres s'arc-boutent contre la paroi extérieure du bloc hydraulique (2).

5. Electrovanne de régulation de pression selon l'une des revendications précédentes, **caractérisée en ce que** la rondelle de blocage (23) est en acier.

6. Electrovanne de régulation de pression selon l'une des revendications précédentes, **caractérisée en ce que** la rondelle souple (26) est en EPDM (éthylène propylène diène).

7. Electrovanne de régulation de pression selon l'une quelconque des revendications précédentes, **caractérisée en ce que** le poussoir (12) et le noyau mobile (13) sont capotés par un couvercle cylindrique fixé de manière étanche à la pièce polaire (9).

8. Electrovanne de régulation de pression selon l'une des revendications 1 à 6, **caractérisée en ce que** le poussoir (12) et le noyau mobile (13) sont capotés par un capuchon (16) fermant leur extrémité libre à l'opposé du siège (7), associé à un manchon cylindrique (17) hermétiquement fixée d'un côté au dit capuchon (16) et de l'autre sur la butée (18) du bloc hydraulique (2), et sur lequel s'applique la rondelle de blocage (23).

9. Electrovanne de régulation de pression selon l'une des revendications 7 et 8, **caractérisée en ce qu'**un ressort (14) est interposé entre la paroi d'extrémité d'orientation radiale du couvercle ou du capuchon (16) et le noyau mobile (12).

10. Electrovanne de régulation de pression selon l'une quelconque des revendications précédentes, **caractérisée en ce que** les moyens d'obturation consistent en une bille (8) sollicitée par le poussoir (12) vers le débouché du conduit (9) traversant le siège (7).

11. Electrovanne de régulation de pression selon l'une quelconque des revendications précédentes, **caractérisée en ce que** l'extrémité du poussoir (12) prévue pour coopérer avec la bille (8) comporte une pièce (15) en matériau plus dur que celui du reste du poussoir (12).

12. Electrovanne de régulation de pression selon l'une quelconque des revendications précédentes, **caractérisée en ce que** la sortie aval du conduit (9) du siège (7), côté bille (8), mène à au moins un canal d'échappement radial (11) pratiqué dans la paroi de la pièce polaire (19).

13. Electrovanne de régulation de pression selon la revendication précédente, **caractérisée en ce que** la pièce polaire (19) comporte au voisinage du siège (7) et au-delà du ou des canaux d'échappement (11), un filetage (21) précédant une encoche périphérique logeant un joint torique (22).

14. Application de l'électrovanne de régulation de pression selon les revendications précédentes, **caractérisée en ce que** le circuit haute pression (10) est celui d'un rail commun de moteur, le circuit basse pression (11) est relié au réservoir du véhicule doté dudit moteur, et le fluide est du carburant pour ce dernier.

## Claims

1. Pressure-regulating solenoid valve comprising an electrical subassembly (1) provided with a coil (3) and its yoke (4), a hydraulic subassembly (2) comprising a seat (7) through which a conduit (9) passes linking two fluid circuits (10, 11), respectively at high and low pressures, means (8) of blocking said conduit (9), a push rod (12) sliding in a pole piece (19) and operating said blocking means (8), a moving core (13) joined to the push rod (12) and the displacement of which is controlled by the coil (3), the electrical (1) and hydraulic (2) subassemblies form two separate unitary blocks, **characterized in that** said blocks are mounted to rotate relative to each other by assembly of the hydraulic block (2) in a conduit passing through the electromagnetic block (1), a locking washer (23) positioned at one end of the conduit preventing any axial displacement of the hydraulic block (2) in one direction and a shoulder (27) located at the other end of said conduit preventing any axial displacement in the other direction by contact with an end stop (18) of the hydraulic block (2), a flexible washer (26) being inserted between the shoulder (27) and the end stop (18).

2. Pressure-regulating solenoid valve according to the preceding claim, **characterized in that** the locking washer (23), fixed to the hydraulic block (2) and resting on the electromagnetic block (1), is positioned so that the flexible washer (26) is compressed between said blocks.

3. Pressure-regulating solenoid valve according to Claim 2, **characterized in that** the locking washer (23) is fixed to the hydraulic block (2) by bracing, and comprises a flat surface (24) of radial appearance resting on a shoulder (25) of the conduit of the electromagnetic block (1).

4. Pressure-regulating solenoid valve according to the preceding claim, **characterized in that** the locking washer (23) comprises a peripheral crown with an axially-oriented outer rim in contact with the internal wall of the conduit, and inclined tabs extending from the radial flat surface (24) toward the inside, the free ends of which are braced against the external wall of the hydraulic block (2).

5. Pressure-regulating solenoid valve according to one of the preceding claims, **characterized in that** the locking washer (23) is made of steel.

6. Pressure-regulating solenoid valve according to one of the preceding claims, **characterized in that** the flexible washer (26) is made of EPDM (ethylene propylene diene monomer).

7. Pressure-regulating solenoid valve according to any one of the preceding claims, **characterized in that** the push rod (12) and the moving core (13) are capped by a cylindrical lid fixed in a seal-tight manner to the pole piece (9).

8. Pressure-regulating solenoid valve according to one of Claims 1 to 6, **characterized in that** the push rod (12) and the moving core (13) are capped by a cap (16) closing their free end opposite the seat (7), associated with a cylindrical sleeve (17) hermetically fixed at one end to said cap (16) and at the other end to the end stop (18) of the hydraulic block (2), and to which the locking washer (23) is applied.

9. Pressure-regulating solenoid valve according to one of Claims 7 and 8, **characterized in that** a spring (14) is inserted between the radially-oriented end wall of the lid or of the cap (16) and the moving core (12).

10. Pressure-regulating solenoid valve according to any one of the preceding claims, **characterized in that** the blocking means consist of a ball (8) stressed by the push rod (12) towards the opening of the conduit (9) passing through the seat (7).

11. Pressure-regulating solenoid valve according to any one of the preceding claims, **characterized in that** the end of the push rod (12) designed to cooperate with the ball (8) includes a part (15) made of a material that is harder than that of the rest of the push rod (12).

12. Pressure-regulating solenoid valve according to any one of the preceding claims, **characterized in that** the downstream outlet of the conduit (9) of the seat (7), at the ball end (8), leads to at least one radial exhaust channel (11) formed in the wall of the pole piece (19).

13. Pressure-regulating solenoid valve according to the preceding claim, **characterized in that** the pole piece (19) includes, in the vicinity of the seat (7) and beyond the exhaust channel or channels (11), a threading (21) preceding a peripheral notch housing an O-ring seal (22).

14. Application of the pressure-regulating solenoid valve according to the preceding claims, **characterized in that** the high-pressure circuit (10) is that of an engine common rail, the low pressure circuit (11) is linked to the tank of the vehicle provided with said engine, and the fluid is fuel for the latter.

## Patentansprüche

1. Elektromagnetisches Druckregelventil, mit einer elektrischen Unterbaugruppe (1), die mit einer Spule (3) und seinem Joch (4) versehen ist, einer hydraulischen Unterbaugruppe (2), die einen Sitz (7) aufweist, der von einer Leitung (9) durchquert wird, die zwei Fluidkreisläufe (10, 11), mit hohem bzw. mit niedrigem Druck, verbindet, Verschlussmitteln (8) für die Leitung (9), einem Schieber (12), der in einem Polstück (19) gleitet und die Verschlussmittel (8) betätigt, einem beweglichen Kern (13), der fest mit dem Schieber (12) verbunden ist und dessen Bewegung durch die Spule (3) gesteuert wird, wobei die elektrische Unterbaugruppe (1) und die hydraulische Unterbaugruppe (2) zwei verschiedene, eine Einheit bildende Blöcke bilden, **dadurch gekennzeichnet, dass** die Blöcke durch Montage des hydraulischen Blocks (2) in einer den elektromagnetischen Block (1) durchquerenden Leitung bezüglich einander drehbar angebracht sind, wobei eine Sicherungsscheibe (23), die an einem der Enden der Leitung angeordnet ist, jegliche Axialbewegung des hydraulischen Blocks (2) in einer Richtung verhindert und eine Schulter (27), die sich am anderen Ende der Leitung befindet, jegliche Axialbewegung in die andere Richtung durch Kontakt mit einem Anschlag (18) des hydraulischen Blocks (2) verhindert, wobei eine flexible Scheibe (26) zwischen der Schulter (27) und dem Anschlag (18) eingesetzt ist.

2. Elektromagnetisches Druckregelventil nach dem vorhergehenden Anspruch, **dadurch gekennzeichnet, dass** die Sicherungsscheibe (23), die an dem hydraulischen Block (2) befestigt ist und am elektromagnetischen Block (1) anliegt, so positioniert ist, dass die flexible Scheibe (26) zwischen den Blöcken komprimiert wird.

3. Elektromagnetisches Druckregelventil nach Anspruch 2, **dadurch gekennzeichnet, dass** die Sicherungsscheibe (23) durch Verstrebung am hydraulischen Block (2) befestigt ist und eine ebene Fläche (24) mit radialem Verlauf aufweist, die an einer Schulter (25) der Leitung des elektromagnetischen Blocks (1) anliegt.

4. Elektromagnetisches Druckregelventil nach dem vorhergehenden Anspruch, **dadurch gekennzeichnet, dass** die Sicherungsscheibe (23) einen Umfangskranz, der einen axial ausgerichteten Außenrand aufweist, der mit der Innenwand der Leitung in Kontakt steht, und geneigte Lappen aufweist, die von der radialen ebenen Fläche (24) nach innen vorragen und deren freie Enden gegen die Außenwand des hydraulischen Blocks (2) verstrebt sind.

5. Elektromagnetisches Druckregelventil nach einem der vorhergehenden Ansprüche, **dadurch gekennzeichnet, dass** die Sicherungsscheibe (23) aus Stahl ist.

6. Elektromagnetisches Druckregelventil nach einem der vorhergehenden Ansprüche, **dadurch gekennzeichnet, dass** die flexible Scheibe (26) aus einem EPDM (Ethylen-Propylen-Dien) ist.

7. Elektromagnetisches Druckregelventil nach einem der vorhergehenden Ansprüche, **dadurch gekennzeichnet, dass** der Schieber (12) und der bewegliche Kern (13) durch einen zylindrischen Deckel abgedeckt sind, der am Polstück (9) dicht befestigt ist.

8. Elektromagnetisches Druckregelventil nach einem der Ansprüche 1 bis 6, **dadurch gekennzeichnet, dass** der Schieber (12) und der bewegliche Kern (13) durch eine Kappe (16) abgedeckt sind, die ihr freies Ende gegenüber dem Sitz (7) schließt und einer zylindrischen Hülse (17) zugeordnet ist, die auf einer Seite an der Kappe (16) und auf der anderen am Anschlag (18) des hydraulischen Blocks (2) hermetisch befestigt ist und die von der Sicherungsscheibe (23) beaufschlagt wird.

9. Elektromagnetisches Druckregelventil nach einem der Ansprüche 7 und 8, **dadurch gekennzeichnet, dass** eine Feder (14) zwischen der radial ausgerichteten Endwand des Deckels oder der Kappe (16) und dem beweglichen Kern (12) angeordnet ist.

10. Elektromagnetisches Druckregelventil nach einem der vorhergehenden Ansprüche, **dadurch gekennzeichnet, dass** die Verschlussmittel aus einer Kugel (8) bestehen, die von dem Schieber (12) zu der Mündung der den Sitz (7) durchquerenden Leitung (9) beaufschlagt wird.

11. Elektromagnetisches Druckregelventil nach einem der vorhergehenden Ansprüche, **dadurch gekennzeichnet, dass** das Ende des Schiebers (12), das zum Zusammenwirken mit der Kugel (8) vorgesehen ist, ein Stück (15) aus einem Material aufweist, das härter ist als das des Rests des Schiebers (12).

12. Elektromagnetisches Druckregelventil nach einem der vorhergehenden Ansprüche, **dadurch gekennzeichnet, dass** der stromabwärtige Ausgang der Leitung (9) des Sitzes (7) auf der Seite der Kugel (8) zu mindestens einem radialen Auslasskanal (11) führt, der in der Wand des Polstücks (19) ausgebildet ist.

13. Elektromagnetisches Druckregelventil nach einem der vorhergehenden Ansprüche, **dadurch gekennzeichnet, dass** das Polstück (19) in der Nähe des Sitzes (7) und hinter dem Auslasskanal oder den Auslasskanälen (11) ein Gewinde (21) aufweist, das einer einen O-Ring (22) aufnehmenden Umfangskerbe vorangeht.

14. Elektromagnetisches Druckregelventil nach einem der vorhergehenden Ansprüche, **dadurch gekennzeichnet, dass** der Hochdruckkreis (10) der einer Common-Rail eines Motors ist, der Niederdruckkreis (11) mit dem Tank des mit dem Motor ausgerüsteten Fahrzeugs verbunden ist und das Fluid Kraftstoff für Letzteren ist.
